(19) Europäisches Patentamt
European Patent Office
Office européen des brevets

(11) **EP 3 714 963 B1**

(12) **EUROPÄISCHE PATENTSCHRIFT**

(45) Veröffentlichungstag und Bekanntmachung des Hinweises auf die Patenterteilung:
**22.12.2021 Patentblatt 2021/51**

(51) Int Cl.:
*B01D 53/26* (2006.01)   *F04D 27/00* (2006.01)
*F04C 18/16* (2006.01)

(21) Anmeldenummer: **19166316.0**

(22) Anmeldetag: **29.03.2019**

(54) **DRUCKLUFTSTATION**

COMPRESSED AIR STATION

STATION D'AIR COMPRIMÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.09.2020 Patentblatt 2020/40**

(73) Patentinhaber: **Kaeser Kompressoren SE 96450 Coburg (DE)**

(72) Erfinder:
• **Schneider, Phil Andre 96450 Coburg (DE)**

• **Kobelt, Klaus-Ulrich 96450 Coburg (DE)**

(74) Vertreter: **Zech, Stefan Markus Meissner Bolte Patentanwälte Rechtsanwälte Partnerschaft mbB Postfach 86 06 24 81633 München (DE)**

(56) Entgegenhaltungen:
DE-A1-102014 000 541    JP-A- H03 178 314
US-A1- 2004 244 393    US-A1- 2010 232 980

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Druckluftstation umfassend mindestens zwei Abwärme liefernde Druckluftkomponenten, wobei die jeweilige Druckluftkomponente entweder als Verdichter, insbesondere als Schraubenkompressor, oder als Kältetrockner ausgebildet ist, sowie mindestens einen Abluftkanal zur Ableitung von Abwärme aus einem Raum. Die DE 10 2014 000 541 A1 offenbart einen Druckluft-Kältetrockner.

Innerhalb des Kältetrockners ist ein Druckluft-Kältemittelwärmetauscher vorgesehen, in dem die Druckluft über ein in einem Kältefluidkreislauf geführtes Kältefluid gekühlt wird, wobei der Kältefluidkreislauf einen Kältefluid-Verdichter, einen Kondensator, ein Expansionsventil und den Druckluft-Kältemittel-Wärmetauscher umfasst. Die von dem oder den Verdichtern produzierte Abwärme wird herkömmlicherweise bereits über ein oder mehrere Abluftkanäle aus einem Betriebsraum, in dem die Druckluftkomponenten aufgestellt sind, abgeleitet. Bei Kältetrocknung, die im Vergleich zu den innerhalb einer Druckluftstation vorhandenen Verdichtern meist ein geringes Maß an Abwärme produzieren, wurde die Abwärme herkömmlicherweise entweder in den Betriebsraum eingeleitet oder über über den Kältetrocknern angeordnete Absaughutzen abgeführt. Gerade bei der Ableitung der Abwärme des oder der Kältetrockner in den Betriebsraum oder auch bei einer nur unvollständigen Abführung über eine über den Kältetrockner angeordnete Absaughutze stellt sich jedoch das Problem, dass sich die Umgebungsluft im Betriebsraum erwärmt und die Effizienz sowohl der Verdichter, insbesondere der Schraubenkompressoren als auch der Kältetrockner sinkt.

Die Aufgabe der vorliegenden Erfindung besteht demgegenüber darin, eine Druckluftstation bzw. ein entsprechendes Verfahren vorzuschlagen, bei dem eine verbesserte Abführung von Abwärme auch eines in der Druckluftstation vorhandenen Kältetrockners aus einem Betriebsraum ermöglicht wird.

Diese Aufgabe wird in vorrichtungstechnischer Hinsicht mit einer Druckluftstation mit den Merkmalen des Anspruchs 1 und in verfahrenstechnischer Hinsicht mit einem Verfahren zum Ansteuern des Lüftermotors eines Lüfters eines Kältetrockners nach den Merkmalen des Anspruchs 12 gelöst. Vorteilhafte Weiterbildungen sind in den Unteransprüchen angegeben.

In vorrichtungstechnischer Hinsicht zeichnet sich die Druckluftstation dadurch aus, dass sie weiterhin einen Trockner-Abluftkanal umfasst, der zur Ableitung eines durch den Kältetrockner geführten Kühlluftstroms vorgesehen ist und einen Kühlluftauslass des Kältetrockners mit einem Kältetrockneranschluss am Abluftkanal verbindet, wobei der Kältetrockner einen Lüfter mit einem drehzahlregelbaren Lüftermotor aufweist und der Lüfter zur Förderung des Kühlluftstroms auch gegen einen aktuell im Abluftkanal vorherrschenden Gegendruck ausgebildet ist, wobei der Kältetrockner einen Strömungssensor zur Erfassung eines jeweils aktuellen Werts für den Kühlluftvolumenstrom $V_{act}$ aufweist und wobei der Kältetrockner eine Steuerung aufweist oder mit einer Steuerung zusammenwirkt, die dazu eingerichtet und ausgebildet ist, die Daten des Strömungssensors zu erfassen und zu verarbeiten, und den Lüftermotor des Lüfters derart anzusteuern, dass unabhängig vom aktuellen Gegendruck im Abluftkanal der jeweils aktuelle Kühlluftvolumenstrom $V_{act}$ einem Sollwert für den Kühlluftvolumenstrom $V_{soll}$ folgt.

In verfahrenstechnischer Hinsicht wird vorgeschlagen, dass der Lüfter eines Kältetrockners innerhalb einer Druckluftstation angesteuert wird, um auch schwankenden Gegendruck innerhalb eines Abluftkanals, der auch von mindestens einer weiteren Druckluftkomponente beschickt wird, auszugleichen, wobei das Verfahren wie folgt ausgestaltet ist:

Verfahren zum Ansteuern des Lüftermotors eines Lüfters eines Kältetrockners innerhalb einer Druckluftstation, wobei die Druckluftstation mindestens zwei Abwärme liefernde Druckluftkomponenten, wobei die jeweilige Druckluftkomponente entweder als Verdichter, insbesondere als Schraubenkompressor, oder als Kältetrockner ausgebildet ist, sowie mindestens einen Abluftkanal zur Ableitung von Abwärme aus einem Raum umfasst, wobei an den Abluftkanal mindestens eine der Druckluftkomponenten, nämlich ein Kältetrockner angeschlossen ist, und wobei an denselben Abluftkanal eine weitere Druckluftkomponente angeschlossen ist,
wobei innerhalb des Kältetrockners ein Druckluft-Kältemittel-Wärmetauscher vorgesehen ist, in dem die Druckluft über ein in einem Kältefluidkreislauf geführtes Kältefluid gekühlt wird, wobei der Kältefluidkreislauf einen Kältefluid-Verdichter, einen Kondensator, ein Expansionsventil und den Druckluft-Kältemittel-Wärmetauscher umfasst,
wobei die Druckluftstation weiterhin einen Trockner-Abluftkanal umfasst, der zur Ableitung eines durch den Kältetrockner geführten Kühlluftstroms vorgesehen ist und einen Kühlluftauslass des Kältetrockners mit einem Kältetrockner-Anschluss am Abluftkanal verbindet,
wobei der Kältetrockner einen Lüfter mit einem drehzahlregelbaren Lüftermotor aufweist und der Lüfter zur Förderung der Abluft auch gegen einen aktuell im Abluftkanal vorherrschenden Gegendruck ausgebildet ist,
wobei das Verfahren die folgenden Schritte umfasst:

- Vorgeben eines Sollwertes $V_{soll}$ für den Kühlluftvolumenstrom,
- Erfassen eines jeweils aktuellen Werts für den Kühlluftvolumenstrom $V_{act}$ und
- Ansteuern des Lüftermotors (21) des Lüfters (20) derart, dass der jeweils aktuelle Kühlluftvolumenstrom $V_{act}$

dem jeweils vorgegebenen Sollwert für den Kühlluftvolumenstrom $V_{soll}$ folgt.

Eine Kernüberlegung der vorliegenden Erfindung besteht darin, eine Regelung des Lüftermotors des Lüfters im Kältetrockner derart vorzunehmen, dass eine Restpressung des Abluftstroms vom Kältetrockner sich auf das Druckniveau eines gemeinsam mit mindestens einen Schraubenkompressor genutzten Abluftkanalsystems einstellt. Die Drehzahl des Lüftermotors des Lüfters wird insofern so verändert, dass die Abluftmenge des Kältetrockners pro Zeiteinheit, mithin also der Kühlluftvolumenstrom des Kältetrockners, unabhängig vom aktuellen Gegendruck im Abluftkanal unverändert bleibt.

Insofern können Kondensationsdruck und Kälteleistung des Kältetrockners unabhängig vom aktuellen Gegendruck auf gleichem Niveau gehalten werden, wobei eine Veränderung des Kondensationsdrucks bzw. der Kälteleistung nach anderen Kriterien möglich bleibt, der aktuell gegebene Gegendruck im Abluftkanal bzw. im Abluftkanalsystem jedoch ohne Einfluss auf den Kondensationsdruck bzw. die Kälteleistung des Kältetrockners gehalten wird. Unter einer aktuell gegebenen Restpressung wird dabei die aktuell gegebene Druckreserve des Lüfters zur Überwindung von zusätzlichen Strömungswiderständen, wie beispielsweise eines Abluftkanals verstanden. Die maximal erzielbare Restpressung des im Kältetrocker eingesetzten Lüfters ist dann als ausreichend anzusehen, wenn der Gegendruck, wie er sich aus der Wechselwirkung mit anderen Komponenten, wie einen angeschlossenen Schraubenkompressor sowie den zusätzlichen Strömungswiderständen, wie sie unter anderem in einem Abluftkanal üblicher Länge auftreten, ergibt, überwunden werden kann.

Obwohl hinsichtlich des Kältefluidkreislaufs von einem Kondensator einerseits und einem Expansionsventil andererseits die Rede ist, wird klargestellt, dass der Kältefluidkreislauf nicht zwangsläufig mit einem Phasenübergang von Gas-Flüssig Flüssig-Gas gefahren werden muss, sondern bei bestimmten Kältemitteln auch über transkritische Prozesse gearbeitet wird, wie beispielsweise bei $CO_2$ (R-744). Es gibt dann keine Verflüssigung, vielmehr wird Wärme auf der Hochdruckseite des Kältefluidkreislaufs abgegeben und die Gasphase beibehalten. Die Gaskühleraustrittstemperatur ist dann als äquivalenter Wert zur Kondensationstemperatur zu sehen.

Unter einem drehzahlregelbaren Lüftermotor im Sinne der Erfindung wird ein Lüftermotor verstanden, der hinsichtlich seiner Drehzahl eingestellt werden kann, insbesondere durch Frequenzumrichtung bzw. durch Phasenanschnitt.

Unter dem durch den Kältetrockner geführten Kühlluftstrom wird in der vorliegenden Anmeldung der Kühlluftstrom als solches bezeichnet. Sofern vom Kühlluftvolumenstrom die Rede ist, so soll damit der quantitative Wert als Volumenstrom, beispielsweise ausgedrückt in der Einheit $m^3/s$, also das vom Kühlluftstrom transportierte Volumen an Kühlluft pro Zeitspanne bezeichnet.

In einer bevorzugten Ausgestaltung der vorliegenden Erfindung ist der Strömungssensor als Differenzdrucksensor ausgebildet.

In einer bevorzugten Ausgestaltung der vorliegend vorgeschlagenen Druckluftstation ist der Lüfter des Kältetrockners insofern auch als Radiallüfter ausgebildet. Zwar haben herkömmlich eingesetzte Axiallüfter im Nennpunkt eine niedrigere Leistungsaufnahme und erscheinen insoweit energetisch zunächst günstiger. Allerdings gilt dies vor allem im Zusammenhang mit herkömmlich eingesetzten Kältetrocknern, die ihre Abwärme unmittelbar in einen Betriebsraum, in dem sie aufgestellt sind, ausblasen. Zum unmittelbaren Anschluss an einen Abluftkanal bzw. an ein Abluftkanalsystem erscheinen Radiallüfter besser geeignet, da sie eine höhere Restpressung sicherstellen können.

In einer weiter bevorzugten Ausgestaltung ist vorgesehen, dass ein Schraubenkompressor und der Kältetrockner über eine Druckluftleitung miteinander verbunden sind und die Druckluftleitung dazu ausgebildet ist, die vom Schraubenkompressor ausgegebene Druckluft zu Trocknungszwecken an den Kältetrockner zu überführen, wobei ein Kühlluftauslass des Schraubenkompressors über einen Kompressoranschluss an den Abluftkanal angeschlossen ist, an den auch der Kältetrockner angeschlossen ist. In dieser möglichen Ausgestaltung fördern Schraubenkompressor und Kältetrockner ihre Abwärme über entsprechende Kühlluftauslässe an denselben Abluftkanal. Gleichzeitig wird die vom Schraubenkompressor abgegebene Druckluft zu Trocknungszwecken an den Kältetrockner überführt. Es ist aber auch denkbar, dass zwar die vom Schraubenkompressor erzeugte Druckluft an den Kältetrockner überführt wird, Schraubenkompressor und Kältetrockner jedoch ihre Abwärme an unterschiedliche Abluftkanäle abgeben.

In der hier vorgeschlagenen Druckluftstation können ein oder mehrere öleingespritzte Schraubenkompressoren und/oder ein oder mehrere ölfreie Verdichter zum Einsatz gelangen.

In einer bevorzugten Ausgestaltung der vorliegend vorgeschlagenen Druckluftstation wirkt die Steuerung mit einem Umgebungsluftsensor, vorzugsweise einem Temperatursensor zusammen, um einen für den Zustand der Zuluft, insbesondere einen für die Zulufttemperatur repräsentativen Wert zu erfassen und an die Steuerung zu übermitteln.

In einer möglichen Ausgestaltung der vorliegenden Erfindung sind an einem gemeinsamen Abluftkanal zwei oder mehr Schraubenkompressoren und/oder zwei oder mehr Kältetrockner angeschlossen. In einem derartigen genutzten gemeinsamen Abluftkanal können besonders große Druckschwankungen bzw. Druckunterschiede auftreten, so dass eine Regelung des Lüftermotors des Lüfters des Kältetrockners, wie im Rahmen der vorliegenden Erfindung vorgeschlagen, von besonderer Bedeutung ist.

In einer bevorzugten Ausgestaltung ergibt sich der Sollwert für den Kühlluftvolumenstrom $V_{soll}$ aus einem für den gegebenen Kältefluidkreislauf mit dem gegebenen Kältefluidverdichter spezifischen Auslegungswert für den Kühlluftvolumenstrom $V_{nenn}$ nach folgender Formel:

$$V_{soll} = V_{nenn} * F_{Hub/KMK} * F_T,$$

wobei die Faktoren $F_{Hub/KMK}$ und $F_T$ Korrekturfaktoren sind, die jeweils alternativ auf 1 oder auf einen Wert zwischen 0 und 1 gesetzt werden können.

In einer bevorzugten Ausgestaltung der vorliegend vorgeschlagenen Druckluftstation wirkt die Steuerung mit einem Umgebungsluftsensor, vorzugsweise einem Temperatursensor zusammen, um einen für den Zustand der Zuluft, insbesondere einen für die Zulufttemperatur repräsentativen Wert zu erfassen und um die Steuerung zu übermitteln.

In einer bevorzugten Ausgestaltung ist im Trocknerabluftkanal eine Abluftklappe angeordnet, die dazu ausgebildet und eingerichtet ist, bei Stillstand des Kältefluidverdichters den Trocknerabluftkanal zu verschließen. Hierdurch wird eine Rückströmung der Abluft zurück in einen Betriebsraum, in dem der Kältetrockner installiert ist, verhindert.

Dabei kann in einer bevorzugten Ausgestaltung die Abluftklappe als eine durch Schwerkraft betätigte Abluftklappe ausgebildet sein, die öffnet, sofern der Lüfter die Abluft durch den Trocknerabluftkanal fördert, und schließt, sofern der Lüfter stillsteht.

In einer alternativ möglichen Ausgestaltung kann die Abluftklappe mit einem Antriebsmotor zusammenwirken, wobei der Antriebsmotor von der Steuerung angesteuert wird, derart, dass in Abhängigkeit des Betriebszustands des Lüfters die Abluftklappe geöffnet oder geschlossen wird. Insbesondere wird bzw. ist die Abluftklappe im Betrieb des Lüfters geöffnet. Bei Stillstand des Lüfters wird bzw. ist die Abluftklappe insbesondere geschlossen.

In einer konkreten Weiterbildung des vorgeschlagenen Verfahrens wird der jeweils aktuelle Wert für den Kühlluftvolumenstrom $V_{act}$ über eine Differenzdruckmessung erfasst. Eine Differenzdruckmessung stellt eine vergleichsweise einfache und gleichzeitig zuverlässige Messweise dar, um einen aktuellen Wert für den Kühlluftvolumenstrom $V_{act}$ mit ausreichender Sicherheit zu ermitteln.

In einer bevorzugten Ausgestaltung wird die bevorzugte Differenzdruckmessung unmittelbar vor Einströmung des Kühlluftstroms in den Lüfter vorgenommen. Das heißt, es wird der Druck im Bereich unmittelbar vor Einströmung des Luftstroms in den Lüfter erfasst und mit einem Referenzdruck verglichen. Ein derartiger Referenzdruck kann beispielsweise zwischen Kondensator und Lüfter vorgesehen sein. Wie bereits weiter vorstehend ausgeführt, stellt dies eine besonders günstige Position innerhalb des Verlaufs des Kühlluftstroms dar, um eine Differenzdruckmessung vorzunehmen.

In einer möglichen Ausgestaltung kann der Sollwert für den Kühlluftvolumenstrom in Abhängigkeit vom Lastzustand des Kälteverdichters und/oder in Abhängigkeit von der Umgebungstemperatur angepasst werden. Bei einer Anpassung des Kühlluftvolumenstroms in Abhängigkeit des Lastzustands des Kältefluidverdichters ist bei nur einem Kältefluidverdichter beispielsweise der Auslastungszustand eines möglicherweise frequenzgeregelt betriebenen Kältefluidverdichters zu berücksichtigen. Wenn bei einer Anlage eine Mehrzahl von Kältefluidkreisläufen parallel zueinander betrieben sind, kann in den Lastzustand beispielsweise auch eingehen, welcher Anteil der Kältefluidverdichter in welchem Maße sich in Last befinden.

In einer bevorzugten Ausgestaltung des vorliegenden Verfahrens ergibt sich der Sollwert für den Kühlluftvolumenstrom $V_{soll}$ aus einem für den Kältefluidkreislauf und den darin verbauten Kältefluidverdichter vorgegebenen Auslegungswert für den Kühlluftvolumenstrom $V_{nenn}$.

In einem weiter bevorzugten Ausführungsbeispiel ergibt sich der Sollwert für den Kühlluftvolumenstrom $V_{soll}$ aus einem für den Kältefluidkreislauf und den darin verbauten Kältefluidverdichter vorgegebenen Auslegungswert für den Kühlluftvolumenstrom $V_{nenn}$ unter Berücksichtigung ein oder mehrerer Korrekturfaktoren F.

In einer konkret bevorzugten Ausgestaltung des vorliegenden Verfahrens ergibt sich der Sollwert für den Kühlluftvolumenstrom $V_{soll}$ aus dem auslegungsbedingten Nennwert für den Kühlluftvolumenstrom $V_{nenn}$ nach folgender Formel: $V_{soll} = V_{nenn} * F_{Hub/KMK} * F_T$, wobei $F_{Hub/KMK}$ ein Korrekturfaktor zur Berücksichtigung des jeweils gegebenen aktuellen Hubvolumens im Kältefluidkreislauf und FT ein Korrekturfaktor zur Berücksichtigung von Temperaturschwankungen in der Zuluft des Kühlluftstroms ist, wobei gilt: $0 \leq F_{Hub/KMK} \leq 1$ und $0 \leq F_T \leq 1$. Insofern ergibt sich $V_{soll}$ also unmittelbar aus $V_{nenn}$, wobei bei bestimmten Betriebssituationen bzw. unter bestimmten Bedingungen ein oder mehrere Korrekturfaktoren zum Einsatz gelangen, die dafür sorgen, dass $V_{soll}$ gegenüber $V_{nenn}$ reduziert wird. $V_{soll}$ kann insofern einen gewissen Prozentsatz zwischen 0 und 100 % von $V_{nenn}$ betragen.

In einer weiterhin bevorzugten Ausgestaltung berücksichtigt ein Korrekturfaktor $F_T$ einen aktuellen Wert der Zulufttemperatur, wobei bei Temperaturen der Zuluft oberhalb einer Grenztemperatur $T_{0,amb}$ der Wert $F_T$ auf 1 gesetzt wird und nur für Werte der Kühllufteintrittstemperatur $T < T_{0,amb}$ gilt, $0 \leq F_T < 1$. In einer ganz konkret bevorzugten Ausgestaltung kann der Korrekturfaktor $F_T$ für die Temperatur T der Zuluft (Kühllufteintrittstemperatur) in Bereichen unterhalb der Grenztemperatur $T_{0,amb}$ wie folgt berechnet werden:

$$T_{0,amb} = \frac{\Delta T}{T_{0,amb} - T_{amb,act}},$$

wobei $\Delta_T$ einen trocknerspezifischen Aufschlag in °C, $T_{0,amb}$ eine festgelegte Grenztemperatur und $T_{amb,act}$ die aktuelle Zulufttemperatur bezeichnen.

In einer weiterhin bevorzugten Ausgestaltung kann der Korrekturfaktor $F_{Hub/KMK}$ aus einem Verhältnis des aktuellen Hubvolumens und des maximalen Hubvolumens im Kältefluidkreislauf nach folgender Formel

$$F_{Hub/KMK} = \frac{\text{aktuelles Hubvolumen KMK}}{\text{maximales Hubvolumen KMK}}$$

gebildet werden. Über den Korrekturfaktor $F_{Hub/KMK}$ können also Betriebssituationen berücksichtigt werden, bei denen das aktuelle Hubvolumen KMK gegenüber einem maximalen Hubvolumen KMK auf das der Kältevolumenkreislauf ausgelegt ist, reduziert ist. Dies kann beispielsweise dadurch gegeben sein, dass bei Verwendung mehrerer Kältefluid-Verdichter beispielsweise ein oder mehrere Kältefluidverdichter ausgeschaltet sind oder bei Verwendung eines in seiner Förderleistung einstellbaren Kältefluid-Verdichters die Förderleistung des KälteFluidverdichters aktuell reduziert ist.

In einer konkret bevorzugten Ausgestaltung des erfindungsgemäßen Verfahrens kann zur Ansteuerung des Lüftermotors des Lüfters zur Annäherung des aktuellen Kühlluftstroms $V_{act}$ an den Sollwert für den Kühlluftvolumenstrom $V_{soll}$ ein PIG-Regler, ein PI-Regler, eine Totbandregelung oder eine Dreipunktregelung zum Einsatz gelangen, wobei sich eine Regelabweichung e aus $V_{soll} - V_{act}$ ergibt und wobei $V_{soll}$ den Sollwert für den Kühlluftvolumenstrom und $V_{act}$ den aktuellen Kühlluftvolumenstrom bezeichnen.

Die Erfindung wird nachstehend auch hinsichtlich weiterer Merkmale und Vorteile anhand der Beschreibung von Ausführungsbeispielen und unter Bezugnahme auf die nachstehenden Zeichnungen näher erläutert. Hierbei zeigen:

Figur 1 ein Ausführungsbeispiel einer erfindungsgemäßen Druckluftstation in skizzenhafter Darstellung;

Figur 2 eine gegenüber der Ausführungsform nach Figur 1 modifizierte Ausführungsform einer Druckluftstation nach der Erfindung in skizzenhafter Darstellung;

Figur 3 eine gegenüber den Figuren 1 und 2 nochmals modifizierte Ausführungsform einer Druckluftstation in skizzenhafter Darstellung;

Figur 4 eine gegenüber den Figuren 1 bis 3 nochmals modifizierte Ausführungsform einer Druckluftstation in skizzenhafter Darstellung;

Figur 5 eine gegenüber den Figuren 1 bis 4 nochmals modifizierte Ausführungsform einer Druckluftstation in skizzenhafter Darstellung;

Figur 6 eine skizzenhafte Darstellung zur Erläuterung der Funktionsweise eines Kältetrockners nach der vorliegenden Erfindung;

Figur 7 ein Ablaufdiagramm zur Erläuterung einer Ausführungsform des erfindungsgemäßen Verfahrens; und

Figur 8 eine Ausführungsform für einen möglichen Verlauf des Korrekturfaktors $F_T$ in Abhängigkeit der Zuluft des Kühlluftstroms $T_{amb}$.

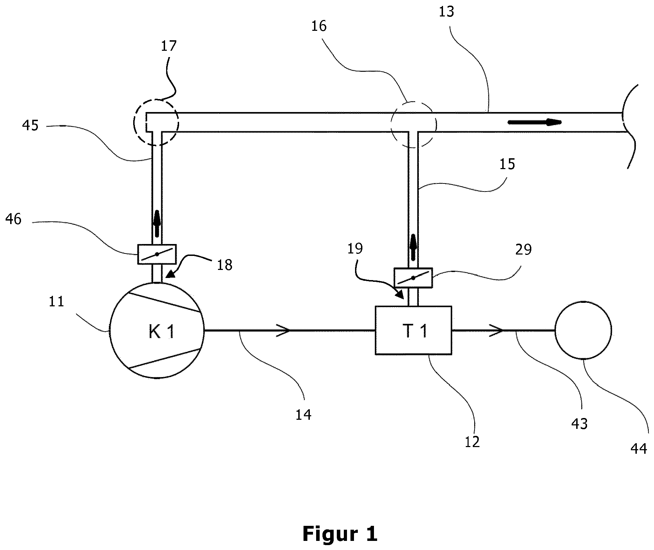

In Figur 1 ist ein Ausführungsbeispiel einer erfindungsgemäßen Druckluftstation dargestellt, bei der als Druckluftkomponenten ein Schraubenkompressor 11 und ein Kältetrockner 12 an einen gemeinsamen Abluftkanal 13 angeschlossen sind. Der Schraubenkompressor 11 liefert über eine Druckluftleitung 14 Druckluft an den Kältetrockner 12. Über eine weitere Druckluftleitung 43 wird die im Kältetrockner 12 getrocknete Druckluft einem Verbraucher 44 zugeführt. Anstelle eines Verbrauchers können auch eine Mehrzahl, insbesondere eine Vielzahl von Verbrauchern über ein Druckluftnetz durch die weitere Druckluftleitung 43 mit Druckluft versorgt werden.

Der Schraubenkompressor 11 und der Kältetrockner 12 produzieren Abwärme, die über entsprechende Kühlluftströme erfindungsgemäß über den gemeinsamen Abluftkanal 13 abgeführt wird. Ein Schraubenkompressor-Abluftkanal 45 bildet das erste Teilstück eines gemeinsamen Abluftkanals 13, an den auch weiter stromabwärts der Kältetrockner 12 über einen Trocknerabluftkanal 15 angeschlossen ist. Konkret weist der Schraubenkompressor 11 einen Kühlluftauslass 18 auf, an den unmittelbar der Schraubenkompressorabluftkanal 45 angeschlossen ist. Der Kältetrockner 12 weist ebenfalls einen Kühlluftauslass 19 auf, an den der Trocknerabluftkanal 15 unmittelbar angeschlossen ist, und zwar vorzugsweise derart, dass ausschließlich die Kühlluft bzw. die Abwärme des Kältetrockners 12 abgeführt wird und keine Vermischung mit nicht über den Kältetrockner 12 geführter Umgebungsluft erfolgt.

Am bereits erwähnten Kältetrockner-Anschluss 16 ist der Trocknerabluftkanal 15 an den gemeinsamen Abluftkanal 13 angeschlossen. Zwischen Kältetrockner 12 und dem Kältetrockner-Anschluss 16 am Abluftkanal 13, insbesondere innerhalb des Trocknerabluftkanals 15 ist noch eine Abluftklappe 29 angeordnet, mittels derer der Trocknerabluftkanal 15 verschlossen werden kann.

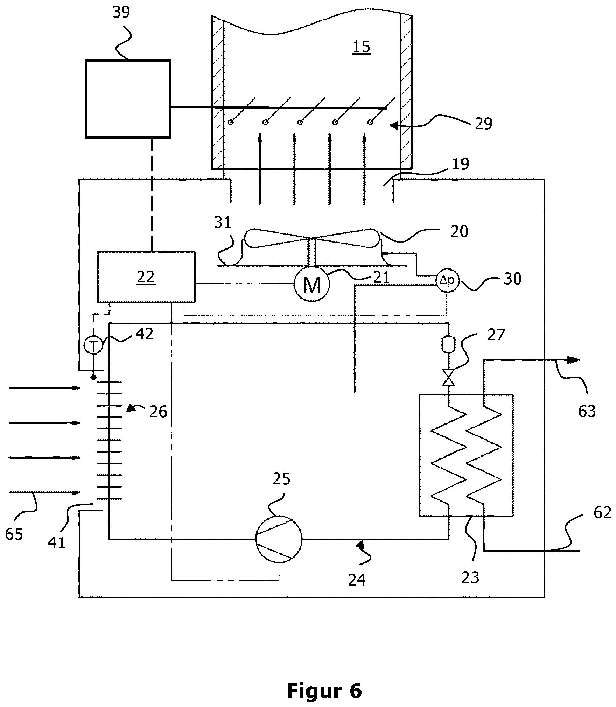

Auch zwischen Schraubenkompressor 11, also zwischen dem Kühlluftauslass 18 des Schraubenkompressors 11 und dem Kältetrockneranschluss 16, insbesondere innerhalb des Schraubenkompressor-Abluftkanals 45 kann noch eine weitere Abluftklappe 46 angeordnet sein. Die Abluftklappe 29 des Kältetrockners und/oder die Abluftklappe 46 des Schraubenkompressors können entweder als passive Rückstromklappen unter Ausnützung einer ausreichenden Strömung in Förderrichtung geöffnet bzw. schwerkraftbedingt geschlossen werden. Es ist aber auch möglich (vgl. Darstellung in Figur 6) die Abluftklappe 29 mit Hilfe eines Antriebsmotors 39 zu öffnen bzw. zu schließen. Natürlich kann auch die Abluftklappe 46 des Schraubenkompressors mit Hilfe eines Antriebsmotors (nicht gezeigt) geöffnet bzw. geschlossen werden.

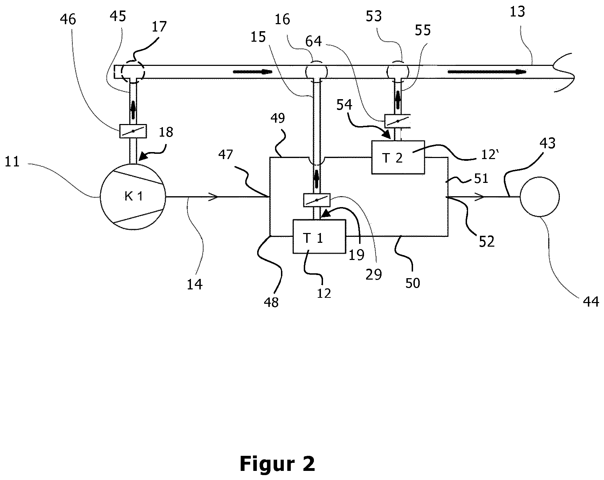

In Figur 2 ist eine gegenüber der Ausführungsform nach Figur 1 abgewandelte Ausführungsform einer Druckluftstation nach der Erfindung dargestellt, bei der als Druckluftkomponenten ein Schraubenkompressor 11 und ein erster Kältetrockner 12 sowie ein weiterer Kältetrockner 12' an einen gemeinsamen Abluftkanal 13 angeschlossen sind. Dort wird die vom Schraubenkompressor an die Druckluftleitung 14 übergebene Druckluft in einem Verzweigungspunkt 47 in eine erste Teilleitung 48 sowie eine zweite Teilleitung 49 aufgeteilt.

In der ersten Teilleitung 48 ist der erste Kältetrockner 12 und in der zweiten Teilleitung 49 der zweite Kältetrockner 12' angeordnet. Die getrocknete Druckluft verlässt den ersten Kältetrockner 12 über eine dritte Teilleitung 50. Die getrocknete Druckluft, die über die zweite Teilleitung 49 in den zweiten Kältetrockner 12' einströmt und dort getrocknet wird, verlässt den Kältetrockner 12' über eine vierte Teilleitung 51. An einem Vereinigungspunkt 52 werden dritte Teilleitung 50 und vierte Teilleitung 51 zusammengeführt und gehen in die Druckluftleitung 43 über, welche die Druckluft an mindestens einen Verbraucher 44 führt.

Der Schraubenkompresser 11, der Kältetrockner 12 sowie der Kältetrockner 12' leiten ihre Kühlluftströme jeweils in einen gemeinsamen Abluftkanal 13. Hierzu ist der Schraubenkompressor 11 in der an sich schon anhand der Ausführungsform nach Figur 1 beschriebenen Weise an den Abluftkanal 13 angeschlossen. Auch der erste Kältetrockner 12 ist wie bereits anhand der Ausführungsform nach Figur 1 beschrieben an den gemeinsamen Abluftkanal 13 zur Übergabe der aus dem Kühlluftauslass 19 abgegebenen Kühlluft bzw. Abwärme angeschlossen. Stromab des Kältetrockneranschlusses 16, der dem ersten Kältetrockner 12 zugeordnet ist, ist am Abluftkanal 13 ein zweiter Kältetrockneranschluss 53 vorgesehen, an dem stromabwärts im Abluftkanal 13 auch die Kühlluft des zweiten Kältetrockners 12' eingebracht wird. Hierzu ist ein Kühlluftauslass 54 des zweiten Kältetrockners an einen Trockner-Abluftkanal 55 angeschlossen, der den Kühlluftauslass 54 des zweiten Kältetrockners 12' mit dem Kältetrockner-Anschluss 53 am Abluftkanal 13 verbindet, so dass die Kühlluft auch des zweiten Kältetrockners ohne nicht über den zweiten Kältetrockner 12' geführte Umgebungsluft abgeführt wird. Auch in diesem, dem zweiten Kältetrockner 12' zugeordneten Trockner-Abluftkanal ist eine Abluftklappe 64 vorgesehen, um den Abluftkanal 55 insbesondere bei Stillstand des zweiten Kältetrockners 12' verschließen zu können.

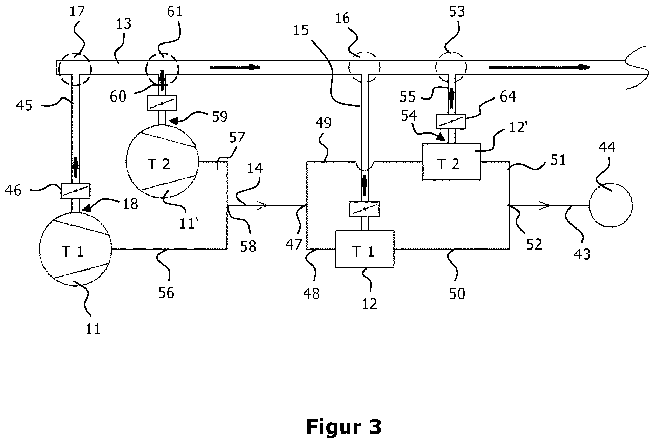

In Figur 3 ist eine gegenüber den Ausführungsformen nach Figur 1 bzw. Figur 2 nochmals modifizierte Ausführungsform einer Druckluftstation dargestellt, bei der als Druckluftkomponenten ein erster Schraubenkompressor 11, ein zweiter Schraubenkompressor 11', ein erster Kältetrockner 12 sowie ein zweiter Kältetrockner 12' an einen gemeinsamen Abluftkanal 13 angeschlossen sind. Bei der in Figur 3 veranschaulichten Ausführungsform einer Druckluftstation sind zwei Schraubenkompressoren, nämlich der erste Schraubenkompressor 11 sowie der zweite Schraubenkompressor 11' vorgesehen, die hinsichtlich der Drucklufterzeugung parallel zueinander arbeiten, also der Schraubenkompressor 11 Druckluft an einer ersten Ausgangsleitung 56 und der Schraubenkompressor 11' Druckluft an eine zweite Ausgangsleitung 57 ausgibt. In einem Vereinigungspunkt 58 vereinigen sich erste Ausgangsleitung 56 und zweite Ausgangsleitung 57 zu einer gemeinsamen Druckluftleitung 14. Von der Druckluftleitung 14 ausgehend wird die Druckluft in einem Verzweigungspunkt 47 an eine erste Teilleitung 48 und an eine zweite Teilleitung 49 geführt, in der jeweils ein Kältetrockner 12 bzw. 12' angeschlossen ist. Die Druckluft wird insofern von den zwei Kältetrocknern 12, 12' parallel getrocknet, so dass die Anordnung der beiden Kältetrockner exakt der Anordnung der beiden Kältetrockner gemäß der Ausführungsform nach Figur 2 entspricht. Auch die Abfuhr der Kühlluft bzw. Abwärme über Trocknerabluftkanal 15 bzw. Trocknerabluftkanal 55 ist exakt wie bei der Anordnung gemäß Figur 2 gelöst.

Abweichend von der Anordnung nach Figur 2 sind aber bei der Ausführungsform nach Figur 3 nicht nur zwei Kältetrockner 12, 12' an den gemeinsamen Abluftkanal 13 angeschlossen, sondern auch die bereits erwähnten beiden Schraubenkompressoren 11, 11'. Der erste Schraubenkompressor 11 ist wie bereits anhand der Figuren 1 bzw. 2 beschrieben, an den gemeinsamen Abluftkanal 13 angeschlossen und stellt bezogen auf die Strömungsrichtung des Abluftkanals 13 die am meisten stromaufwärts angeordnete, Abwärme liefernde Komponente dar. Der Schraubenkompressor 11 ist also der stromaufwärtigst platzierte Abwärmelieferant innerhalb des gemeinsamen Abluftkanals 13.

Der bereits erwähnte zweite Schraubenkompressor 11' weist einen Kühlluftauslass 59 auf, mit dem er an einen Trocknerabluftkanal 60 angeschlossen ist. Der Schraubenkompressorabluftkanal 60 verbindet den Kühlluftauslass 59 des zweiten Schraubenkompressors 11' mit einem Kompressoranschluss 61, an dem der Trocknerabluftkanal 60 an den gemeinsamen Abluftkanal 13 angeschlossen ist, und zwar an einem Abschnitt zwischen dem Kompressor-Anschluss 17 des ersten Schraubenkompressors 11 und dem Kältetrockner-Anschluss 16 des ersten Kältetrockners 12 bzw. dem zweiten Kältetrockner-Anschluss 53 des Kältetrockners 12'.

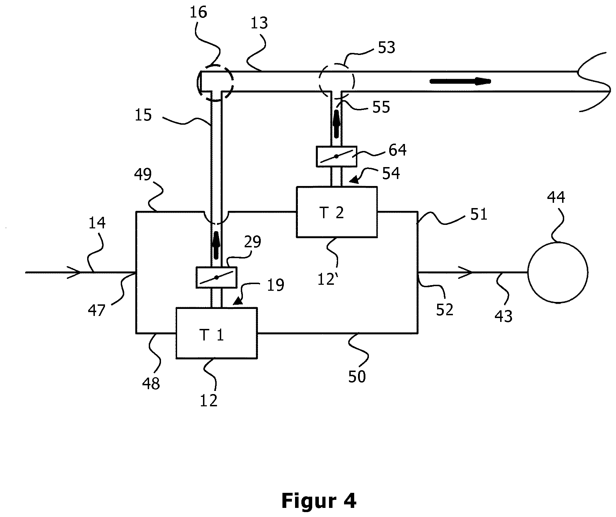

In Figur 4 ist eine nochmals abgewandelte Ausführungsform veranschaulicht, bei der als Druckluftkomponenten ein erster Kältetrockner 12 sowie ein zweiter Kältetrockner 12' an einen gemeinsamen Abluftkanal 13 angeschlossen sind. Hier wird also ein gemeinsamer Abluftkanal 13 nicht von einem Kältetrockner 12 und einem Schraubenkompressor 11, sondern von zwei Kältetrocknern 12, 12' beschickt. Der Anschluss der Kältetrockner 12, 12' entspricht dem Anschluss der Kältetrockner 12, 12' in der Anordnung der Ausführungsform nach Figur 3 mit der einzigen Ausnahme, dass stromaufwärts der Anschlussstellen der Kältetrockner 12, 12' am gemeinsamen Abluftkanal 13 keine Kühlluft bzw. Abwärme eines Schraubenkompressors 11, 11' eingeleitet wird.

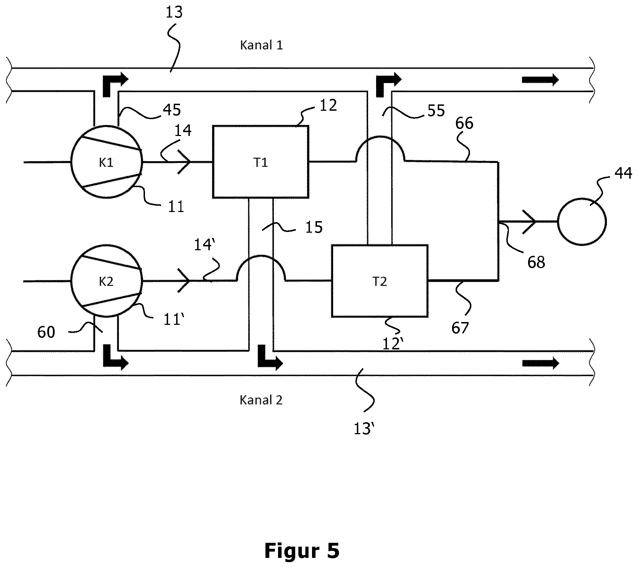

In Figur 5 ist eine nochmals abgewandelte Ausführungsform veranschaulicht, bei der als Druckluftkomponenten ein erster Schraubenkompressor 11 Abwärme in einen ersten Abluftkanal 13 über einen Schraubenkompressorabluftkanal 45 abführt. Der Schraubenkompressor 11 liefert über eine Druckluftleitung 14 Druckluft an einen ersten Kältetrockner 12. Die im Kältetrockner 12 getrocknete Druckluft wird über eine erste Ausgangsleitung 66 an einen Vereinigungspunkt 68 geführt, an dem auch in einem zweiten Kältetrockner 12' getrocknete Druckluft über eine zweite Ausgangsleitung 67 geführt wird. Vom Vereinigungspunkt 68 ausgehend wird die zusammengeführte getrocknete Druckluft einen Verbraucher 44 zugeführt.

Ein zweiter Schraubenkompressor 11' erzeugt Druckluft und übergibt diese Druckluft über die Druckluftleitung 14' an den bereits erwähnten zweiten Kältetrockner 12'. Abwärme des zweiten Kältetrockners 11' wird über einen Schraubenkompressorabluftkanal 60 einem vom Abluftkanal 13 getrennten zweiten Abluftkanal 13' zugeführt. In diesen zweiten Abluftkanal 13' wird auch Abwärme des ersten Kältetrockners 12 über einen Trocknerabluftkanal 15 abgeführt. Der drucklufttechnisch mit dem zweiten Schraubenkompressor 11' verbundene zweite Kältetrockner 12' fördert hingegen seine Abluft über einen Trocknerabluftkanal 55 an den Abluftkanal 13, der auch vom ersten Schraubenkompressor 11 beschickt wird. Insofern sind hier die jeweils hintereinander geschalteten Paare von Schraubenkompressoren und Kältetrocknern verschränkt an zwei unterschiedliche Abluftkanälte 13, 13' angeschlossen.

Nachstehend werden unter Bezugnahme auf Figur 6 der prinzipielle Aufbau sowie die grundlegende Funktionsweise eines Kältetrockners 12, 12' nach der vorliegenden Erfindung näher erläutert. Der Kältetrockner weist zunächst einen Drucklufteinlass 62 sowie einen Druckluftauslass 63 auf. Die über den Drucklufteinlass 62 in den Kältetrockner 12, 12' einströmende Druckluft wird an einem Druckluft-Kältemittel-Wärmetauscher 23 durch ein Kältefluid gekühlt und verlässt den Kältetrockner durch den Druckluftauslass 63. Meist wird die Druckluft, wie es dem Fachmann hinlänglich bekannt ist, vor Einströmen in den Druckluft-Kältemittel-Wärmetauscher 23 in einem Vorwärmetauscher vorgekühlt, und zwar durch die bereits durch den Druckluft-Kältemittel-Wärmetauscher 23 geströmte Druckluft, die dadurch vor dem Ausströmen aus dem Druckluftauslass 63 wieder erwärmt wird. Der vorstehend beschriebene Vorwärmetauscher ist vorliegend jedoch nicht dargestellt.

Zur Bereitstellung der am Druckluft-Kältemittel-Wärmetauscher 23 benötigten Kälteleistung ist dieser Bestandteil eines Kältefluidkreislaufs 24, der eine an sich bekannte Kompressionskältemaschine ausbildet und insofern in Strömungsrichtung des Kältefluids betrachtet ausgehend vom Druckluft-Kältemittel-Wärmetauscher 23 an den Kältefluidverdichter 25, einen daran angeschlossenen Kondensator 26 sowie stromabwärts davon ein Expansionsventil 27 umfasst. Das nach Durchströmen des Expansionsventils 27 expandierte Gas ist durch den Expansionsvorgang abgekühlt und gibt die Kälte im Druckluft-Kältemittel-Wärmetauscher 23 an die Druckluft ab. Der Kältefluidverdichter 25 komprimiert das Kältefluid. Die dabei entstehende Wärme wird im Kondensator 26 an die Zuluft abgegeben. Zu diesem Zwecke wird ein Kühlluftstrom 65 durch den Kältetrockner 12, 12' geführt, wobei die Zuluft im Regelfall Umgebungsluft darstellt und in einem Zulufteinlass 41 in den Kältetrockner 12, 12' eingesaugt wird, und zwar unter Wirkung eines über einen Lüftermotor 21 angetriebenen Lüfters 20.

Der Kühlluftstrom 65 nimmt im Kondensator 26 Wärme auf, so dass das Kältefluid im Kondensator 26 gekühlt wird. Die so entstehende Abwärme soll erfindungsgemäß über einen Trocknerabluftkanal 15 an einen Abluftkanal 13, in dem auch Abwärme anderer Druckluft erzeugender oder Druckluft aufbereitender Komponenten geführt ist, eingebracht werden. Zu diesem Zweck ist der Trocknerabluftkanal 15 unmittelbar am Kühlluftauslass 19 des Kältetrockners 12, 12' angeschlossen. Eine Abluftklappe 29, die über einen Antriebsmotor 39 verstellt werden kann, insbesondere von einer Offen- in eine Schließposition bzw. vice versa, wirkt mit einer Steuerung 22 zusammen, die die Abluftklappe 29 ansteuert und im Bedarfsfall schließt bzw. öffnet.

Die Steuerung 22 steuert aber auch den Lüftermotor 21 des Lüfters 20 an.

Der Lüftermotor 21 ist dabei drehzahlgeregelt. Über einen Strömungssensor 30 wird ein aktueller Wert für den Kühlluftvolumenstrom $V_{act}$ innerhalb des Kühlluftstroms 65 erfasst. Bevorzugterweise erfolgt dies dadurch, dass der Strömungssensor 30 als Differenzdrucksensor ausgebildet ist und einerseits den Druck innerhalb des Kühlluftstroms 65 im Bereich einer Einströmdüse 31, die unmittelbar vor dem Lüfter 20 angeordnet ist und andererseits in einem stromaufwärtigen Bereich des Kühlluftstroms weit vor Einströmen in die Einströmdüse 31 erfasst. Aus diesen beiden Druckwerten bzw. der sich hieraus ergebenen Druckdifferenz kann auf die Strömungsgeschwindigkeit des Kühlluftstroms und damit unter Zugrundelegung des gegebenen Strömungsquerschnitts auf den aktuell gegebenen Volumenstrom rückgerechnet werden. Der aktuelle Wert des Kühlluftvolumenstroms $V_{act}$, der über den Strömungssensor 30 erfasst wird, wird an die Steuerung 22 übermittelt, die dann den Lüftermotor 21 derart ansteuert, dass unabhängig vom aktuellen Gegendruck im Abluftkanal 13 ein jeweils vorgegebener Wert für den Kühlluftvolumenstrom $V_{soll}$ möglichst genau eingehalten wird, also der Lüfter 20 derart nachgeregelt wird, dass der aktuelle Kühlluftvolumenstrom $V_{act}$ den jeweils voreingestellten Sollwert für den Kühlluftvolumenstrom $V_{soll}$ folgt.

Obwohl die hier vorgeschlagene Differenzdruckmessung eine besonders einfache, kostengünstige und zuverlässige Methode darstellt, um den aktuellen Kühlluftvolumenstrom $V_{act}$ zu ermitteln, ist die Erfindung natürlich nicht auf diese spezielle Art der Erfassung des Werts des Kühlluftvolumenstroms beschränkt. Vielmehr sind verschiedene andere Messtechniken bzw. Verfahren denkbar, um den aktuellen Wert des Kühlluftvolumenstroms zu erfassen.

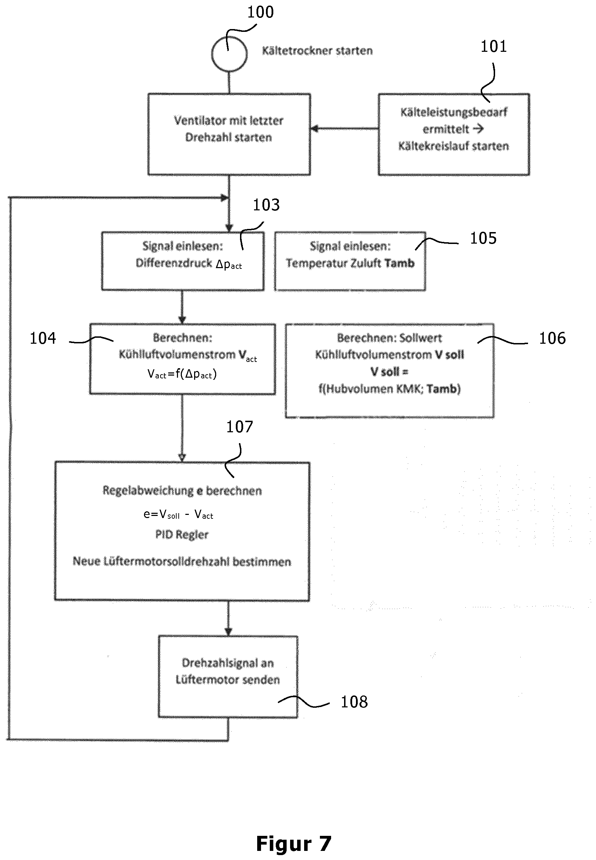

Eine bevorzugte Regelung unter Berücksichtigung des jeweils aktuellen Werts für den Kühlluftvolumenstrom $V_{act}$ wird nachstehend unter Bezugnahme auf das Ablaufdiagramm nach Fig. 7 näher erläutert:

In einem Schritt 100 wird zunächst der Kältetrockner 12, 12' gestartet. In einem Schritt 101 wird der Kälteleistungsbedarf ermittelt und der Kältekreislauf 24 durch Inbetriebsetzen des Kältefluid-Verdichters 25 gestartet. Der Lüfter 20 wird im Schritt 102 mit einer festgelegten Mindestdrehzahl gestartet.

Anschließend wird im Schritt 103 über den Strömungssensor 30 ein aktueller Differenzdruck $\Delta p_{act}$ ermittelt und in einem Schritt 104 aus dem aktuellen Differenzdruck $\Delta p_{act}$ ein aktueller Kühlluftvolumenstrom $V_{act}$ errechnet. Parallel hierzu wird ein Sollwert für den Kühlluftvolumenstrom $V_{soll}$ festgelegt. Dies erfolgt in der vorliegenden Ausführungsform dadurch, dass zunächst in einem Schritt 105 ein Signal für die Zulufttemperatur $T_{amb}$ eingelesen wird. In einem Schritt 106 wird unter Berücksichtigung der Temperatur der Zuluft $T_{amb}$ und ggf. auch eines aktuellen Hubvolumens ein Sollwert für den Kühlluftvolumenstrom $V_{soll}$ berechnet. Ausgehend von einem für den gegebenen Kältefluidkreislauf 24 mit dem gegebenen Kältefluidverdichter 25 spezifischen Auslegungswert für den Kühlluftvolumenstrom $V_{nenn}$ wird ein Sollwert für den Kühlluftvolumenstrom unter Einbeziehung zweier Korrekturfaktoren nach folgender Formel ermittelt:

$$V_{soll} = V_{nenn} * F_{Hub/KMK} * F_{T},$$

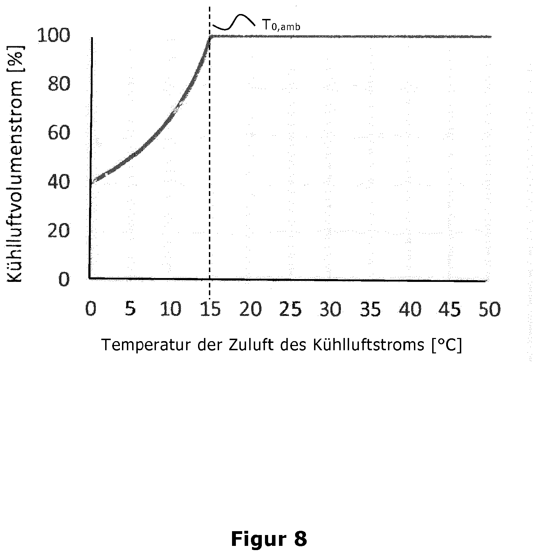

wobei die Faktoren $F_{Hub/KMK}$ und $F_T$ Korrekturfaktoren sind. Der Korrekturfaktor $F_T$ gelangt nur zur Anwendung, sofern die Zulufttemperatur unterhalb einer Grenztemperatur $T_{0,amb}$ liegt und wird ansonsten gleich 1 gesetzt, vgl. hierzu Fig. 8, die ein Beispiel für den Verlauf des Korrekturfaktors $F_T$, hier in % ausgedrückt, zeigt, wobei hier die Grenztemperatur $T_{0,amb}$ bei 15 °C gesetzt wurde. Sofern die Temperatur der Zuluft unterhalb der Grenztemperatur $T_{0,amb}$ liegt, kann der Korrekturfaktor beispielsweise wie folgt definiert sein:

$$F_T = \frac{\Delta_T}{T_{0,amb} - T_{amb,act}}.$$

Die Berechnung des Korrekturfaktors für das Hubvolumen kann nach folgender Formel vorgenommen werden:

$$F_{Hub/KMK} = \frac{aktuelles\ Hubvolumen\ KMK}{maximales\ Hubvolumen\ KMK}.$$

In einem Schritt 107 wird der aktuelle Kühlluftvolumenstrom $V_{act}$ mit dem im Schritt 106 bestimmten Sollwert für den Kühlluftvolumenstrom verglichen und dabei die Differenz aus $V_{soll}$ und $V_{act}$ gebildet, wobei diese Differenz eine Regelabweichung e definiert. Der Lüfter 20 wird nun so angesteuert, dass der Kühlluftvolumenstrom $V_{act}$ den vorgegebenen Sollwert für den Kühlluftvolumenstrom $V_{soll}$ folgt und zwar dadurch, dass im Schritt 108 ein aktuelles Drehzahlsignal an den Lüftermotor 21 für den Lüfter 20 gesandt wird. Mit einer vorbestimmten Abtastfrequenz von z.B. 100 ms beginnt das Verfahren dann mit Schritt 103 bzw. 105 von neuem.

Bezugszeichen

| 11, 11' | Schraubenkompressor |
|---|---|
| 12, 12' | Kältetrockner |
| 13, 13' | Abluftkanal |
| 14, 14' | Druckluftleitung |
| 15 | Trockner-Abluftkanal |
| 16 | Kältetrockner-Anschluss |
| 17 | Kompressor-Anschluss |
| 18 | Kühlluftauslass (Schraubenkompressor) |
| 19 | Kühlluftauslass (Kältetrockner) |
| 20 | Lüfter |
| 21 | Lüftermotor |
| 22 | Steuerung |
| 23 | Druckluft-Kältemittel-Wärmetauscher |
| 24 | Kältefluidkreislauf |
| 25 | Kältefluid-Verdichter |
| 26 | Kondensator |
| 27 | Expansionsventil |
| 28 | Drucksensor |
| 29 | Abluftklappe |
| 30 | Strömungssensor |
| 31 | Einströmdüse |
| 39 | Antriebsmotor |
| 41 | Zulufteinlass |
| 42 | Umgebungsluftsensor/Temperatursensor |
| 43 | weitere Druckluftleitung |
| 44 | Verbraucher |
| 45 | Schraubenkompressorabluftkanal |
| 46 | Abluftklappe (Schraubenkompressor) |
| 47 | Verzweigungspunkt |
| 48 | erste Teilleitung |
| 49 | zweite Teilleitung |
| 50 | dritte Teilleitung |
| 51 | vierte Teilleitung |
| 52 | Vereinigungspunkt |
| 53 | weiterer Kältetrockneranschluss |
| 54 | Kühlluftauslass |
| 55 | Trockner-Abluftkanal |
| 56 | erste Ausgangsleitung |
| 57 | zweite Ausgangsleitung |
| 58 | Vereinigungspunkt |
| 59 | Kühlluftauslass |
| 60 | Schraubenkompressorabluftkanal |
| 61 | Kompressor-Anschluss |
| 62 | Drucklufteinlass |
| 63 | Druckluftauslass |
| 64 | Abluftklappe |
| 65 | Kühlluftstrom |
| 66 | erste Ausgangsleitung |
| 67 | zweite Ausgangsleitung |
| 68 | Vereinigungspunkt |
| 69 | Abluftklappe |

**Patentansprüche**

1. Druckluftstation umfassend mindestens zwei Abwärme liefernde Druckluftkomponenten, wobei die jeweilige Druckluftkomponente entweder als Verdichter, insbesondere als Schraubenkompressor, oder

als Kältetrockner ausgebildet ist, sowie mindestens einen Abluftkanal (13) zur Ableitung von Abwärme aus einem Raum,

wobei an den Abluftkanal (13) mindestens eine der Druckluftkomponenten, nämlich ein Kältetrockner (12) angeschlossen ist und wobei an demselben Abluftkanal (13) eine weitere Druckluftkomponente angeschlossen ist,

wobei innerhalb des Kältetrockners (12) ein Druckluft-Kältemittel-Wärmetauscher (23) vorgesehen ist, in dem die Druckluft über ein in einem Kältefluidkreislauf (24) geführtes Kältefluid gekühlt wird, wobei der Kältefluidkreislauf (24) einen Kältefluid-Verdichter (25), einen Kondensator (26), ein Expansionsventil (27) und den Druckluft-Kältemittel-Wärmetauscher (23) umfasst,

wobei die Druckluftstation weiterhin einen Trockner-Abluftkanal (15) umfasst, der zur Ableitung eines durch den Kältetrockner (12) geführten Kühlluftstroms vorgesehen ist und einen Kühlluftauslass (19) des Kältetrockners (12) mit einem Kältetrockner-Anschluss (16) am Abluftkanal (13) verbindet,

wobei der Kältetrockner (12) einen Lüfter (20) mit einem drehzahlregelbaren Lüftermotor (21) aufweist und der Lüfter (20) zur Förderung des Kühlluftstroms auch gegen einen aktuell im Abluftkanal (13) vorherrschenden Gegendruck ausgebildet ist,

wobei der Kältetrockner (12) einen Strömungssensor (30) zur Erfassung eines jeweils aktuellen Wertes für den Kühlluftvolumenstrom $V_{act}$ aufweist und wobei der Kältetrockner (12) eine Steuerung (22) aufweist oder mit einer Steuerung (22) zusammenwirkt, die dazu eingerichtet und ausgebildet ist, die Daten des Strömungssensors (30) zu erfassen und zu verarbeiten und den Lüftermotor (21) des Lüfters (20) derart anzusteuern, dass unabhängig vom aktuellen Gegendruck im Abluftkanal (13) der jeweils aktuelle Kühlluftvolumenstrom $V_{act}$ einem Sollwert für den Kühlluftvolumenstrom $V_{soll}$ folgt.

2. Druckluftstation nach Anspruch 1,
**dadurch gekennzeichnet, dass**
der Strömungssensor (30) als Differenzdrucksensor ausgebildet ist.

3. Druckluftstation nach Anspruch 2,
**dadurch gekennzeichnet, dass**
der als Differenzdrucksensor ausgebildete Strömungssensor (30) innerhalb einer dem Lüfter (20) zugeordneten Einströmdüse (31) zugeordnet ist und den dort herrschenden Druck im Vergleich zu einem Referenzdruck erfasst.

4. Druckluftstation nach einem der Ansprüche 1 bis 3,
**dadurch gekennzeichnet, dass**
der Lüfter (20) des Kältetrockners (12) als Radiallüfter ausgebildet ist.

5. Druckluftstation nach einem der Ansprüche 1 bis 4,
**dadurch gekennzeichnet, dass** Schraubenkompressor (11) und der Kältetrockner (12) über eine Druckluftleitung (14) miteinander verbunden sind und die Druckluftleitung (14) dazu ausgebildet ist, die vom Schraubenkompressor (11) ausgegebene Druckluft zu Trocknungszwecken an den Kältetrockner (12) zu überführen, wobei ein Kühlluftauslass (18) des Schraubenkompressors (11) über einen Kompressor-Anschluss (17) an den Abluftkanal (13) angeschlossen ist, an den auch der Kältetrockner (12) angeschlossen ist.

6. Druckluftstation nach einem der Ansprüche 1 bis 5,
**dadurch gekennzeichnet, dass**
der Sollwert für den Kühlluftvolumenstrom $V_{soll}$ in Abhängigkeit vom Lastzustand des Kältefluidverdichters und/oder in Abhängigkeit von der Umgebungstemperatur angepasst wird.

7. Druckluftstation nach einem der Ansprüche 1 bis 6,
**dadurch gekennzeichnet, dass**
ein Sollwert für den Kühlluftvolumenstrom $V_{soll}$ sich aus einem für den gegebenen Kältefluidkreislauf (24) mit dem gegebenen Kältefluid-Verdichter (25) spezifischen Auslegungswert für den Kühlluftvolumenstrom $V_{nenn}$ ergibt nach folgender Formel:

$$V_{soll} = V_{nenn} * F_{Hub/KMK} * F_T,$$

wobei die Faktoren $F_{Hub/KMK}$ und $F_T$ Korrekturfaktoren sind, die jeweils alternativ auf 1 oder auf einen Wert zwischen 0 und 1 gesetzt werden können.

**8.** Druckluftstation nach einem der Ansprüche 1 bis 7,
**dadurch gekennzeichnet, dass**
die Steuerung (22) mit einem Umgebungsluftsensor, vorzugsweise einem Temperatursensor (42) zusammenwirkt, um einen für den Zustand der Zuluft, insbesondere einen für die Zulufttemperatur repräsentativen Wert zu erfassen und an die Steuerung zu übermitteln.

**9.** Druckluftstation nach einem der Ansprüche 1 bis 8,
**dadurch gekennzeichnet, dass**
im Trocknerabluftkanal (15) eine Abluftklappe angeordnet ist, die dazu ausgebildet und eingerichtet ist, bei Stillstand des Kältefluidverdichters (25) den Trockner-Abluftkanal (15) zu verschließen.

**10.** Druckluftstation nach Anspruch 9,
**dadurch gekennzeichnet, dass**
die Abluftklappe (29) als schwerkraftbetätigte Abluftklappe ausgebildet ist, die öffnet, sofern der Lüfter (20) die Abluft durch den Trockner-Abluftkanal (15) fördert und schließt, sofern der Lüfter (20) stillsteht.

**11.** Druckluftstation nach Anspruch 9,
**dadurch gekennzeichnet, dass**
die Abluftklappe (29) mit einem Antriebsmotor (39) zusammenwirkt, wobei der Antriebsmotor (39) von der Steuerung (22) angesteuert wird derart, dass abhängig vom Betriebszustand des Lüfters (20) die Abluftklappe (29) geöffnet oder geschlossen wird.

**12.** Verfahren zum Ansteuern eines Lüftermotors (21) eines Lüfters (20) eines Kältetrockners (12) innerhalb einer Druckluftstation, wobei die Druckluftstation mindestens zwei Abwärme liefernde Druckluftkomponenten, wobei die jeweilige Druckluftkomponente entweder als Verdichter, insbesondere als Schraubenkompressor, oder als Kältetrockner ausgebildet ist, sowie mindestens einen Abluftkanal (13) zur Ableitung von Abwärme aus einem Raum umfasst, wobei an den Abluftkanal (13) mindestens eine der Druckluftkomponenten, nämlich ein Kältetrockner (12) angeschlossen ist, und wobei an denselben Abluftkanal (13) eine weitere Druckluftkomponente angeschlossen ist,

wobei innerhalb des Kältetrockners (12) ein Druckluft-Kältemittel-Wärmetauscher (23) vorgesehen ist, in dem die Druckluft über ein in einem Kältefluidkreislauf (24) geführtes Kältefluid gekühlt wird, wobei der Kältefluidkreislauf (24) einen Kältefluid-Verdichter (25), einen Kondensator (26), ein Expansionsventil (27) und den Druckluft-Kältemittel-Wärmetauscher (23) umfasst,
wobei die Druckluftstation weiterhin einen Trockner-Abluftkanal (15) umfasst, der zur Ableitung eines durch den Kältetrockner geführten Kühlluftstroms vom Kältetrockner (12) vorgesehen ist und einen Kühlluftauslass (19) des Kältetrockners (12) mit einem Kältetrockner-Anschluss (16) am Abluftkanal (13) verbindet,
wobei der Kältetrockner (12) einen Lüfter (20) mit einem drehzahlregelbaren Lüftermotor (21) aufweist und der Lüfter (20) zur Förderung des Kühlluftstroms auch gegen einen aktuell im Abluftkanal (13) vorherrschenden Gegendruck ausgebildet ist,
wobei das Verfahren die folgenden Schritte umfasst:

- Vorgeben eines Sollwertes $V_{soll}$ für den Kühlluftvolumenstrom,
- Erfassen eines jeweils aktuellen Werts für den Kühlluftvolumenstrom $V_{act}$ und
- Ansteuern des Lüftermotors (21) des Lüfters (20) derart, dass der jeweils aktuelle Kühlluftvolumenstrom $V_{act}$ dem jeweils vorgegebenen Sollwert für den Kühlluftvolumenstrom $V_{soll}$ folgt.

**13.** Verfahren nach Anspruch 12,
**dadurch gekennzeichnet, dass**
der jeweils aktuelle Wert für den Kühlluftvolumenstrom $V_{act}$ über eine Differenzdruckmessung erfasst wird.

**14.** Verfahren nach Anspruch 13,
**dadurch gekennzeichnet, dass**
bei der Differenzdruckmessung ein Druck unmittelbar vor dem Einströmen des Kühlluftstroms in den Lüfter (20) relativ zu einem Referenzdruck erfasst wird.

**15.** Verfahren nach einem der Ansprüche 12 bis 14,
**dadurch gekennzeichnet, dass**
sich der Sollwert für den Kühlluftvolumenstrom $V_{soll}$ aus einem für den Kältefluidkreislauf (24) und den darin verbauten Kältefluidverdichter (25) vorgegebenen Auslegungswert für den Kühlluftvolumenstrom $V_{nenn}$ ergibt.

16. Verfahren nach einem der Ansprüche 12 bis 15,
**dadurch gekennzeichnet, dass**
der Sollwert für den Kühlluftvolumenstrom $V_{soll}$ in Abhängigkeit vom Lastzustand des Kältefluidverdichters und/oder in Abhängigkeit von der Umgebungstemperatur angepasst wird.

17. Verfahren nach einem der Ansprüche 12 bis 16,
**dadurch gekennzeichnet, dass**
sich der Sollwert für den Kühlluftvolumenstrom $V_{soll}$ aus einem für den Kältefluidkreislauf (24) und den daran verbauten Kältefluidverdichter (25) vorgegebenen Auslegungswert für den Kühlluftvolumenstrom $V_{nenn}$ unter Berück-sichtigung ein oder mehrerer Korrekturfaktoren F ergibt.

18. Verfahren nach Anspruch 16 oder 17,
**dadurch gekennzeichnet, dass**
sich der Sollwert für den Kühlluftvolumenstrom $V_{soll}$ aus dem auslegungsbedingten Nennwert für den Kühlluftvolu-menstrom $V_{nenn}$ nach folgender Formel ergibt:

$$V_{soll} = V_{nenn} * F_{Hub/KMK} * F_T,$$

wobei $F_{Hub/KMK}$ ein Korrekturfaktor zur Berücksichtigung des jeweils gegebenen aktuellen Hubvolumens im Kältefluidkreislauf (24) und $F_T$ ein Korrekturfaktor zur Berücksichtigung von Temperaturschwankungen in der Zuluft des Kühlluftstroms ist, wobei gilt:

$$0 \leq F_{Hub/KMK} \leq 1 \text{ und } 0 \leq F_T \leq 1.$$

19. Verfahren nach Anspruch 18,
**dadurch gekennzeichnet, dass** bei Temperaturen der Zuluft oberhalb einer Grenztemperatur $T_{0,\,amb}$ der Wert T auf 1 gesetzt wird und nur für Werte der Kühllufteintrittstemperatur $T < T_{0,\,amb}$ gilt:

$$0 \leq F_T < 1.$$

20. Verfahren nach Anspruch 18 oder 19,
**dadurch gekennzeichnet, dass** der Korrekturfaktor $F_T$ für die Kühllufteintrittstemperatur T in Bereichen der Kühllufteintrittstemperatur unterhalb der Grenztemperatur $T_{0,\,amb}$ wie folgt berechnet wird:

$$F_T = \frac{\Delta_T}{T_{0,amb} - T_{amb,act}},$$

wobei $\Delta_T$ einen trocknerspezifischen Aufschlag in °C, $T_{0,amb}$ eine festgelegte Grenztemperatur und $T_{amb,act}$ die aktuelle Zulufttemperatur bezeichnen.

21. Verfahren nach einem der Ansprüche 15 bis 18,
**dadurch gekennzeichnet, dass**
der Korrekturfaktor $F_{Hub/KMK}$ aus einem Verhältnis des aktuellen Hubvolumens und des maximalen Hubvolumens im Kältefluidkreislauf (24) nach folgender Formel

$$F_{Hub/KMK} = \frac{\text{aktuelles Hubvolumen KMK}}{\text{maximales Hubvolumen KMK}}$$

gebildet wird.

22. Verfahren nach einem der Ansprüche 12 bis 21,
**dadurch gekennzeichnet, dass** zur Ansteuerung des Lüftermotors (21) des Lüfters (20) zur Annäherung von $V_{act}$

an $V_{soll}$ ein PID-Regler, ein PI-Regler, eine Totbandregelung oder eine Dreipunktregelung zum Einsatz gelangt, wobei sich eine Regelabweichung e aus $V_{soll}$ - $V_{act}$ ergibt und wobei $V_{soll}$ den Sollwert für den Kühlluftvolumenstrom und $V_{act}$ den aktuellen Kühlluftvolumenstrom bezeichnen.

**Claims**

1. Compressed air station comprising at least two compressed air components that yield waste heat, wherein each compressed air component is designed either as a compressor, in particular as a screw compressor, or as a refrigeration dryer, as well as at least one exhaust air duct (13) for discharging exhaust heat from a room

   wherein at least one of the compressed air components, namely a refrigeration dryer (12), is connected to the exhaust air duct (13), and wherein a further compressed air component is connected to the same exhaust air duct (13),

   wherein a compressed air refrigeration heat exchanger (23) is provided within the refrigeration dryer (12), in which the compressed air is cooled by way of a refrigerant conducted in a refrigerant circuit (24), wherein the refrigerant circuit (24) comprises a refrigerant compressor (25), a condenser (26), an expansion valve (27) and the compressed air refrigeration heat exchanger (23),

   wherein the compressed air station further comprises a dryer exhaust air duct (15), which is provided for discharging a cooling air flow that is conducted through the refrigeration dryer (12), and which connects a cooling air outlet (19) of the refrigeration dryer (12) to a refrigeration dryer connection (16) on the exhaust air duct (13), wherein the refrigeration dryer (12) has a fan (20) with a speed-adjustable fan motor (21), and the fan (20) is designed to convey the cooling air flow even against a backpressure currently prevailing in the exhaust air duct (13),

   wherein the refrigeration dryer (12) has a flow sensor (30) for detecting a respective current value for the cooling air volume flow $V_{act}$,

   and wherein the refrigeration dryer (12) has a controller (22) or interacts with a controller (22), which is configured and designed to record and process the data from the flow sensor (30) and to actuate the fan motor (21) of the fan (20) in such a way that, regardless of the current backpressure in the exhaust air duct (13), the respective current cooling air volume flow $V_{act}$ follows a setpoint for the cooling air volume flow $V_{soll}$.

2. Compressed air station according to claim 1,
   **characterized in that**
   the flow sensor (30) is designed as a differential pressure sensor.

3. Compressed air station according to claim 2,
   **characterized in that**
   the flow sensor (30) designed as a differential pressure sensor is assigned within an inflow nozzle (31) assigned to the fan (20) and detects the pressure prevailing there in comparison to a reference pressure.

4. Compressed air station according to any one of claims 1 to 3, **characterized in that**
   the fan (20) of the refrigeration dryer (12) is designed as a radial fan.

5. Compressed air station according to any one of claims 1 to 4, **characterized in that**
   a screw compressor (11) and the refrigeration dryer (12) are connected to one another via a compressed air line (14), and the compressed air line (14) is designed to transfer the compressed air output by the screw compressor (11) to the refrigeration dryer (12) for drying purposes, wherein a cooling air outlet (18) of the screw compressor (11) is connected via a compressor connection (17) to the exhaust air duct (13), to which the refrigeration dryer (12) is also connected.

6. Compressed air station according to any one of claims 1 to 5, **characterized in that**
   the setpoint for the cooling air volume flow $V_{soll}$ is adapted as a function of the load state of the refrigerant compressor and/or as a function of the ambient temperature.

7. Compressed air station according to any one of claims 1 to 6, **characterized in that**
   a setpoint for the cooling air volume flow $V_{soll}$ results from a design value for the cooling air volume flow $V_{nenn}$, which is specific to the given refrigerant circuit (24) with the given refrigerant compressor (25), according to the following formula:

$$V_{soll} = V_{nenn} * F_{Hub/KMK} * F_{T},$$

where the factors $F_{Hub/KMK}$ and $F_T$ are correction factors, each of which can alternatively be set to 1 or to a value between 0 and 1.

**8.** Compressed air station according to any one of claims 1 to 7, **characterized in that**
the controller (22) interacts with an ambient air sensor, preferably a temperature sensor (42), for detecting a value representative of the state of the supply air, in particular a value representative of the supply air temperature, and transmitting it to the controller.

**9.** Compressed air station according to any one of claims 1 to 8, **characterized in that**
an exhaust air damper is arranged in the dryer exhaust air duct (15), which damper is designed and configured to close the dryer exhaust air duct (15) when the refrigerant compressor (25) is idle.

**10.** Compressed air station according to claim 9,
**characterized in that**
the exhaust air damper (29) is designed as a gravity-operated exhaust air damper, which opens whenever the fan (20) is conveying the exhaust air through the dryer exhaust air duct (15) and closes whenever the fan (20) is idle.

**11.** Compressed air station according to claim 9,
**characterized in that**
the exhaust air damper (29) interacts with a drive motor (39), wherein the drive motor (39) is actuated by the controller (22) in such a way that the exhaust air damper (29) is opened or closed depending on the operating state of the fan (20).

**12.** Method for actuating a fan motor (21) of a fan (20) of a refrigeration dryer (12) within a compressed air station, wherein the compressed air station comprises at least two compressed air components that yield waste heat, wherein each compressed air component is designed either as a compressor, in particular as a screw compressor, or as a refrigeration dryer, and at least one exhaust air duct (13) for discharging waste heat from a room, wherein at least one of the compressed air components, namely a refrigeration dryer (12), is connected to the exhaust air duct (13), and wherein a further compressed air component is connected to the same exhaust air duct (13),

wherein a compressed air refrigeration heat exchanger (23) is provided within the refrigeration dryer (12), in which the compressed air is cooled by way of a refrigerant conducted in a refrigerant circuit (24), wherein the refrigerant circuit (24) comprises a refrigerant compressor (25), a condenser (26), an expansion valve (27) and the compressed air refrigeration heat exchanger (23),
wherein the compressed air station further comprises a dryer exhaust air duct (15), which is provided for discharging from the refrigeration dryer (12) a cooling air flow that is conducted through the refrigeration dryer, and which connects a cooling air outlet (19) of the refrigeration dryer (12) to a refrigeration dryer connection (16) on the exhaust air duct (13), wherein the refrigeration dryer (12) has a fan (20) with a speed-adjustable fan motor (21), and the fan (20) is designed to convey the cooling air flow even against a backpressure currently prevailing in the exhaust air duct (13),
wherein the method comprises the following steps:

- specifying a setpoint $V_{soll}$ for the cooling air volume flow,
- detecting a respective current value for the cooling air volume flow $V_{act}$, and
- actuating the fan motor (21) of the fan (20) in such a way that the respective current cooling air volume flow $V_{act}$ follows the respectively specified setpoint for the cooling air volume flow $V_{soll}$.

**13.** Method according to claim 12,
**characterized in that**
the respective current value for the cooling air volume flow $V_{act}$ is detected by way of a differential pressure measurement.

**14.** Method according to claim 13,
**characterized in that**
in the differential pressure measurement a pressure is detected, relative to a reference pressure, immediately before the cooling air flow flows into the fan (20).

**15.** Method according to any one of claims 12 to 14,
**characterized in that**
the setpoint for the cooling air volume flow $V_{soll}$ results from a design value for the cooling air volume flow $V_{nenn}$, which is specified for the refrigerant circuit (24) and the refrigerant compressors (25) installed therein.

**16.** Method according to any one of claims 12 to 15,
**characterized in that**
the setpoint for the cooling air volume flow $V_{soll}$ is adapted as a function of the load state of the refrigerant compressor and/or as a function of the ambient temperature.

**17.** Method according to any one of claims 12 to 16,
**characterized in that**
the setpoint for the cooling air volume flow $V_{soll}$ results from a design value for the cooling air volume flow $V_{nenn}$, which is specified for the refrigerant circuit (24) and the refrigerant compressors (25) installed therein, taking into account one or more correction factors F.

**18.** Method according to claim 16 or 17,
**characterized in that**
the setpoint for the cooling air volume flow $V_{soll}$ results from the design-based nominal value for the cooling air volume flow $V_{nenn}$, according to the following formula:

$$V_{soll} = V_{nenn} * F_{Hub/KMK} * F_T,$$

where $F_{Hub/KMK}$ is a correction factor for taking into account the respective current stroke volume in the refrigerant circuit (24), and $F_T$ is a correction factor for taking into account temperature fluctuations in the supply air of the cooling air flow, where:

$$0 \leq F_{Hub/KMK} \leq 1 \text{ and } 0 \leq F_T \leq 1.$$

**19.** Method according to claim 18,
**characterized in that**
the value T is set to 1 in the case of supply air temperatures above a limit temperature $T_{0,amb}$, and:

$$0 \leq F_T < 1$$

applies only in the case of cooling air inlet temperature values $T < T_{0,amb}$.

**20.** Method according to claim 18 or 19,
**characterized in that**
the correction factor $F_T$ for the cooling air inlet temperature T in ranges of the cooling air inlet temperature below the limit temperature $T_{0,amb}$ is calculated as follows:

$$F_T = \frac{\Delta_T}{T_{0,amb} - T_{amb,act}},$$

where $\Delta_T$ denotes a dryer-specific supplement in °C, $T_{0,amb}$ denotes a fixed limit temperature, and $T_{amb,act}$ denotes the current supply air temperature.

**21.** Method according to any one of claims 15 to 18,
**characterized in that**
the correction factor $F_{Hub/KMK}$ is formed from a ratio of the current stroke volume and of the maximum stroke volume in the refrigerant circuit (24), according to the following formula

$$F_{Hub/KMK} = \frac{\text{current stroke volume KMK}}{\text{maximum stroke volume KMK}}.$$

22. Method according to any one of claims 12 to 21,
    **characterized in that**
    a PID controller, a PI controller, a deadband controller or a three-point controller is used to actuate the fan motor (21) of the fan (20) in order to bring $V_{act}$ towards $V_{soll}$, wherein a control deviation e results from $V_{soll}$ - $V_{act}$, and wherein $V_{soll}$ denotes the setpoint for the cooling air volume flow and $V_{act}$ denotes the current cooling air volume flow.

## Revendications

1. Station d'air comprimé comprenant au moins deux composants d'air comprimé fournissant de la chaleur perdue, sachant que le composant d'air comprimé respectif est constitué soit comme compresseur, en particulier comme compresseur à vis, soit comme sécheur frigorifique, ainsi qu'au moins un conduit d'échappement (13) destiné à évacuer de la chaleur perdue d'un espace,

   sachant qu'au moins un des composants d'air comprimé, en particulier un sécheur frigorifique (12), est raccordé au conduit d'échappement (13) et sachant qu'un composant d'air comprimé supplémentaire est raccordé au même conduit d'échappement (13),
   sachant qu'un échangeur de chaleur de réfrigérant d'air comprimé (23) dans lequel l'air comprimé est refroidi via un fluide réfrigérant guidé dans un circuit de fluide réfrigérant (24) est prévu à l'intérieur du sécheur frigorifique (12), sachant que le circuit de fluide réfrigérant (24) comprend un compresseur de fluide réfrigérant (25), un condenseur (26), une vanne de détente (27) et l'échangeur de chaleur de réfrigérant d'air comprimé (23),
   sachant que la station d'air comprimé comprend en outre un conduit d'échappement de sécheur (15) qui est prévu pour évacuer un flux d'air de refroidissement guidé à travers le sécheur frigorifique (12) et relie une sortie d'air de refroidissement (19) du sécheur frigorifique (12) à un raccord de sécheur frigorifique (16) au niveau du conduit d'échappement (13),
   sachant que le sécheur frigorifique (12) présente un ventilateur (20) avec un moteur de ventilateur (21) réglable en vitesse de rotation et le ventilateur (20) est constitué pour refouler le flux d'air de refroidissement y compris contre une contrepression régnant actuellement dans le conduit d'échappement (13),
   sachant que le sécheur frigorifique (12) présente un capteur de débit (30) destiné à saisir une valeur respectivement actuelle pour le débit volumique d'air de refroidissement $V_{act}$ et sachant que le sécheur frigorifique (12) présente une commande (22) ou interagit avec une commande (22) qui est configurée et constituée pour saisir et traiter les données du capteur de débit (30) et piloter le moteur de ventilateur (21) du ventilateur (20) de telle manière que le débit volumique d'air de refroidissement $V_{act}$ respectivement actuel suive une valeur définie pour le débit volumique d'air de refroidissement $V_{soll}$ indépendamment de la contrepression actuelle.

2. Station d'air comprimé selon la revendication 1,
   **caractérisée en ce que**
   le capteur de débit (30) est constitué comme capteur de pression différentielle.

3. Station d'air comprimé selon la revendication 2,
   **caractérisée en ce que**
   le capteur de débit (30) constitué comme capteur de pression différentielle est associé à l'intérieur d'une buse d'admission (31) associée au ventilateur (20) et y saisit la pression qui y règne en comparaison avec une pression de référence.

4. Station d'air comprimé selon l'une des revendications 1 à 3,
   **caractérisée en ce que**
   le ventilateur (20) du sécheur frigorifique (12) est constitué comme ventilateur radial.

5. Station d'air comprimé selon l'une des revendications 1 à 4,
   **caractérisée en ce que**
   un compresseur à vis (11) et le sécheur frigorifique (12) sont reliés l'un à l'autre via une conduite d'air comprimé (14) et la conduite d'air comprimé (14) est constituée pour transférer l'air comprimé délivré par le compresseur à vis (11) au sécheur frigorifique (12) à des fins de séchage, sachant qu'une sortie d'air de refroidissement (18) du compresseur à vis (11) est raccordée via un raccord de compresseur (17) au conduit d'échappement (13) auquel le sécheur frigorifique (12) est également raccordé.

6. Station d'air comprimé selon l'une des revendications 1 à 5,
**caractérisée en ce que**
la valeur définie pour le débit volumique d'air de refroidissement $V_{soll}$ est adaptée en fonction de l'état de charge du compresseur de fluide réfrigérant et/ou en fonction de la température ambiante.

7. Station d'air comprimé selon l'une des revendications 1 à 6,
**caractérisée en ce que**
une valeur définie pour le débit volumique d'air de refroidissement $V_{soll}$ résulte d'une valeur de conception spécifique au circuit de fluide réfrigérant (24) donné avec le compresseur de fluide réfrigérant (25) donné pour le débit volumique d'air de refroidissement $V_{nenn}$ selon la formule suivante :

$$V_{soll} = V_{nenn}*F_{Hub/KMK}*F_T,$$

sachant que les facteurs $F_{Hub/KMK}$ et $F_T$ sont des facteurs de correction qui peuvent être mis respectivement en alternance à 1 ou à une valeur entre 0 et 1.

8. Station d'air comprimé selon l'une des revendications 1 à 7,
**caractérisée en ce que**
la commande (22) interagit avec un capteur d'air ambiant, de préférence un capteur de température (42), pour saisir et transmettre à la commande une valeur représentative de l'état de l'air entrant, en particulier de la température d'air entrant.

9. Station d'air comprimé selon l'une des revendications 1 à 8,
**caractérisée en ce que**
un clapet d'air d'échappement qui est constitué et configuré pour fermer le conduit d'échappement de sécheur (15) à l'arrêt du compresseur de fluide réfrigérant (25) est disposé dans le conduit d'échappement de sécheur (15).

10. Station d'air comprimé selon la revendication 9,
**caractérisée en ce que**
le clapet d'air d'échappement (29) est constitué comme clapet d'air d'échappement actionné par la pesanteur qui s'ouvre dans la mesure où le ventilateur (20) refoule l'air d'échappement par le conduit d'échappement de sécheur (15) et se ferme dans la mesure où le ventilateur (20) est à l'arrêt.

11. Station d'air comprimé selon la revendication 9,
**caractérisée en ce que**
le clapet d'air d'échappement (29) interagit avec un moteur d'entraînement (39), sachant que le moteur d'entraînement (39) est piloté par la commande (22) de telle manière que le clapet d'air d'échappement (29) soit ouvert ou fermé en fonction de l'état de fonctionnement du ventilateur (20).

12. Procédé de pilotage d'un moteur de ventilateur (21) d'un ventilateur (20) d'un sécheur frigorifique (12) à l'intérieur d'une station d'air comprimé, sachant que la station d'air comprimé comprend au moins deux composants d'air comprimé fournissant de la chaleur perdue, sachant que le composant d'air comprimé respectif est constitué soit comme compresseur, en particulier comme compresseur à vis, soit comme sécheur frigorifique, ainsi qu'au moins un conduit d'échappement (13) destiné à évacuer de la chaleur perdue d'un espace, sachant qu'au moins un des composants d'air comprimé, en particulier un sécheur frigorifique (12), est raccordé au conduit d'échappement (13), et sachant qu'un composant d'air comprimé supplémentaire est raccordé au même conduit d'échappement (13),

sachant qu'un échangeur de chaleur de réfrigérant d'air comprimé (23) dans lequel l'air comprimé est refroidi via un fluide réfrigérant guidé dans un circuit de fluide réfrigérant (24) est prévu à l'intérieur du sécheur frigorifique (12), sachant que le circuit de fluide réfrigérant (24) comprend un compresseur de fluide réfrigérant (25), un condenseur (26), une vanne de détente (27) et l'échangeur de chaleur de réfrigérant d'air comprimé (23), sachant que la station d'air comprimé comprend en outre un conduit d'échappement de sécheur (15) qui est prévu pour évacuer un flux d'air de refroidissement guidé à travers le sécheur frigorifique (12) et relie une sortie d'air de refroidissement (19) du sécheur frigorifique (12) à un raccord de sécheur frigorifique (16) au niveau du conduit d'échappement (13),

sachant que le sécheur frigorifique (12) présente un ventilateur (20) avec un moteur de ventilateur (21) réglable en vitesse de rotation et le ventilateur (20) est constitué pour refouler le flux d'air de refroidissement y compris contre une contrepression régnant actuellement dans le conduit d'échappement (13), sachant que le procédé comprend les étapes suivantes :

- spécification d'une valeur définie $V_{soll}$ pour le débit volumique d'air de refroidissement,
- saisie d'une valeur respectivement actuelle pour le débit volumique d'air de refroidissement $V_{act}$ et
- pilotage du moteur de ventilateur (21) du ventilateur (20) de telle manière que le débit volumique d'air de refroidissement $V_{act}$ respectivement actuel suive la valeur définie spécifiée pour le débit volumique d'air de refroidissement $V_{soll}$.

**13.** Procédé selon la revendication 12,
**caractérisé en ce que**
la valeur respectivement actuelle pour le débit volumique d'air de refroidissement $V_{act}$ est saisie via une mesure de pression différentielle.

**14.** Procédé selon la revendication 13,
**caractérisé en ce que**
lors de la mesure de pression différentielle, une pression est saisie immédiatement avant l'admission du flux d'air de refroidissement dans le ventilateur (20) relativement à une pression de référence.

**15.** Procédé selon l'une des revendications 12 à 14,
**caractérisé en ce que**
la valeur définie pour le débit volumique d'air de refroidissement $V_{soll}$ résulte d'une valeur de conception spécifiée pour le circuit de fluide réfrigérant (24) et le compresseur de fluide réfrigérant (25) incorporé dans celui-ci pour le débit volumique d'air de refroidissement $V_{nenn}$.

**16.** Procédé selon l'une des revendications 12 à 15,
**caractérisé en ce que**
la valeur définie pour le débit volumique d'air de refroidissement $V_{soll}$ est adaptée en fonction de l'état de charge du compresseur de fluide réfrigérant et/ou en fonction de la température ambiante.

**17.** Procédé selon l'une des revendications 12 à 16,
**caractérisé en ce que**
la valeur définie pour le débit volumique d'air de refroidissement $V_{soll}$ résulte d'une valeur de conception spécifiée pour le circuit de fluide réfrigérant (24) et le compresseur de fluide réfrigérant (25) incorporé dans celui-ci pour le débit volumique d'air de refroidissement $V_{nenn}$ compte tenu d'un ou de plusieurs facteurs de correction F.

**18.** Procédé selon la revendication 16 ou 17,
**caractérisé en ce que**
la valeur définie pour le débit volumique d'air de refroidissement $V_{soll}$ résulte de la valeur nominale de conception pour le débit volumique d'air de refroidissement $V_{nenn}$ selon la formule suivante :

$$V_{soll} = V_{nenn} * F_{Hub/KMK} * F_{T,}$$

sachant que $F_{Hub/KMK}$ est un facteur de correction destiné à tenir compte du déplacement de pistons actuel respectivement donné dans le circuit de fluide réfrigérant (24) et $F_T$ est un facteur de correction destiné à tenir compte de fluctuations de température dans l'air entrant du flux d'air de refroidissement, sachant qu'on applique :

$$0 \leq F_{Hub/KMK} \leq 1 \text{ et } 0 \leq F_T \leq 1.$$

**19.** Procédé selon la revendication 18,
**caractérisé en ce que**
en cas de températures de l'air entrant supérieures à une température limite $T_{0, amb}$, la valeur T est mise à 1 et seulement pour des valeurs de la température d'air entrant de refroidissement $T < T_{0, amb}$ on applique :

$$0 \leq F_T < 1.$$

**20.** Procédé selon la revendication 18 ou 19,
**caractérisé en ce que**
le facteur de correction $F_T$ pour la température d'air entrant de refroidissement T dans des plages de la température d'air entrant de refroidissement inférieures à la température limite $T_{0,\,amb}$ est calculé comme suit :

$$F_T = \frac{\Delta_T}{T_{0,amb} - T_{amb,act}}$$

sachant que $\Delta_T$ désigne une majoration spécifique au sécheur en °C, $T_{0,amb}$ une température limite définie et $T_{amb,act}$ la température d'air entrant actuelle.

**21.** Procédé selon l'une des revendications 15 à 18,
**caractérisé en ce que**
le facteur de correction $F_{Hub/KMK}$ est formé à partir d'un rapport du déplacement de pistons actuel et du déplacement de pistons maximal dans le circuit de fluide réfrigérant (24) selon la formule suivante

$$F_{Hub/KMK} = \text{déplacement de pistons actuel KMK} / \text{déplacement de pistons maximal KMK}$$

**22.** Procédé selon l'une des revendications 12 à 21,
**caractérisé en ce que**
pour le pilotage du moteur de ventilateur (21) du ventilateur (20), afin d'approximer $V_{act}$ à $V_{soll}$, un régulateur PID, un régulateur PI, une régulation de bande interdite ou une régulation à trois points est mis en œuvre, sachant qu'un écart de régulation e résulte de $V_{soll} - V_{act}$ et sachant que $V_{soll}$ désigne la valeur définie pour le débit volumique d'air de refroidissement et $V_{act}$ le débit volumique d'air de refroidissement actuel.

**Figur 1**

**Figur 2**

**Figur 3**

**Figur 4**

**Figur 5**

**Figur 6**

**Figur 7**

**Figur 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014000541 A1